# FASCICULE DE BREVET EUROPEEN

(11) **EP 2 887 106 B1**
(45) Date de publication et mention de la délivrance du brevet: **15.05.2019**
(21) Numéro de dépôt: 14195659.9
(22) Date de dépôt: 01.12.2014
(51) Int. Cl.: G03B 21/60, G02B 5/02, G02B 27/01

(54) **Système de visualisation comprenant un écran comportant un réseau de motifs diffusants tridimentionnels**
Anzeigesystem, das einen Bildschirm umfasst, der wiederum ein Netz von dreidimensionalen Streumotiven umfasst
Display system comprising a screen including a grid of three-dimensional diffusing patterns

(30) Priorité: 11.12.2013 FR 1302896
(43) Date de publication de la demande: 24.06.2015
(73) Titulaire: Thales, 92400 Courbevoie (FR)
(72) Inventeur: Pelletier, Sébastien, 33187 LE HAILLAN Cedex (FR); Gueguen, Aude, 33187 LE HAILLAN Cedex (FR); Grossetete, Matthieu, 33187 LE HAILLAN Cedex (FR); Bardon, Jean-Luc, 33187 LE HAILLAN Cedex (FR); Laluque, Laurent, 33187 LE HAILLAN Cedex (FR)
(74) Mandataire: Bréda, Jean-Marc

(56) Documents cités:
- WO-A1-2013/046858
- WO-A2-2005/043233
- US-A1- 2005 206 854

## Description

Le domaine de l'invention est celui des dispositifs de visualisation projetant une image sur un écran semi-transparent. Ces dispositifs permettent d'afficher une image face à l'utilisateur en superposition sur le paysage extérieur. Un des domaines d'utilisation possible est la présentation d'informations dans les véhicules, plus précisément dans les cockpits d'aéronef et en particulier dans les cockpits d'aéronefs qui disposent de surfaces vitrées importantes. Le document WO2005043233A divulgue une système de visualisation de l'état de l'art.

Ces systèmes de visualisation permettent de conserver l'attention de l'utilisateur sur l'environnement qui l'entoure, tout en lui donnant accès instantanément à des informations additionnelles. Dans le cas de la conduite d'un véhicule, avoir des informations affichées dans le champ visuel de l'environnement extérieur évite à l'utilisateur d'avoir à chercher ces informations sur des écrans situés classiquement sur sa planche de bord ou son tableau de bord.

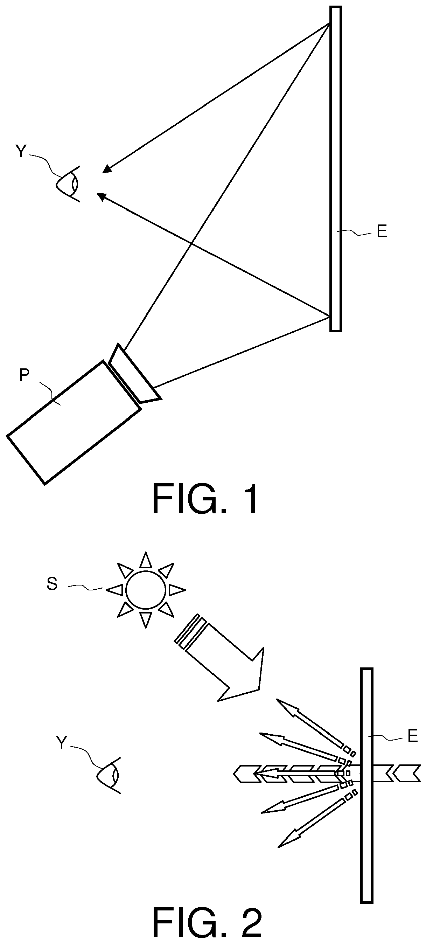

Il existe différentes solutions techniques permettant de projeter une image sur un écran semi-transparent. La plus courante est illustrée en figure 1. Elle consiste à projeter l'image issue d'un projecteur P émettant dans le visible sur la surface d'un film diffusant transparent E. Le diffuseur diffuse l'image projetée vers l'oeil Y de l'observateur, tout en restant relativement transparent et permettant ainsi la vision de l'extérieur. Le compromis entre transmission et diffusion n'est pas simple à trouver. Des films diffusants sont dédiés à la projection publicitaire sur les parois vitrées des magasins. Cependant, la technique est surtout utilisée de nuit, c'est-à-dire sous faible luminosité ambiante. De jour, cette technique donne des résultats médiocres. En effet, comme on le voit en figure 2, le film E diffuse la lumière solaire S dans toutes les directions (flèches droites rayées de la figure 2). La transmission de la lumière est représentée par une succession de chevrons sur cette figure. Le film apparaît alors laiteux, la transparence est limitée, le rendement en réflexion et la luminosité de l'image projetée restent faibles et peu satisfaisants.

Aussi, la demanderesse a proposé dans la demande FR 2 986 624 intitulée « Projecteur optique à écran de projection semi-transparent » un écran de visualisation comportant une pluralité de motifs diffusants la lumière régulièrement répartis sur une surface transparente, ces motifs pouvant comporter un traitement réfléchissant. Par rapport aux systèmes précédents, l'écran semi-transparent de ce projecteur possède à la fois une grande transparence et donne une bonne luminosité de l'image projetée, tout en ayant une diffraction limitée.

Cependant, les rayons lumineux issus du projecteur et diffusés par l'écran ont tous une incidence connue. De la même façon, l'éclairement solaire ne peut venir que de certaines directions, certaines parties du cockpit constituant un masque naturel. Or, l'écran précédent est isotrope. Il ne prend pas en compte de façon fine les variations d'incidence des rayons lumineux issus du projecteur de façon à optimiser les rendements de diffusion vers l'oeil de l'observateur.

L'écran selon l'invention ne présente pas ces inconvénients. Il comporte des motifs orientés de façon à prendre en compte les positions du projecteur d'images et de l'utilisateur de façon à assurer une diffusion optimale de la lumière. De plus, la diffusion par l'éclairement solaire est minimisée. Plus précisément, l'invention a pour objet un système de visualisation comportant un projecteur d'images et un écran de visualisation associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs diffusants régulièrement répartis, caractérisé en ce que, le projecteur d'images éclairant l'écran sous une pluralité d'incidences déterminées par la position et la taille de l'écran de visualisation, lesdites incidences centrées sur une incidence moyenne, les motifs optiques comportent au moins une surface diffusante orientée de façon à diffuser les rayons lumineux ayant au moins l'incidence moyenne dans une ou des directions correspondant audit emplacement déterminé de l'observateur. Les motifs sont des trous creusés dans une des deux faces transparentes, chaque trou comportant une partie diffusante et opaque tournée vers l'incidence moyenne.

Avantageusement, l'orientation de chaque motif est adaptée à l'incidence de la lumière issue du projecteur d'image et qui éclaire ledit motif.

Avantageusement, les motifs sont des trous cylindriques creusés dans une des deux faces transparentes, chaque trou comportant un fond plan perpendiculaire à l'axe du cylindre, diffusant et opaque, l'axe du cylindre étant parallèle à l'incidence de la lumière issue du projecteur d'image et qui éclaire ledit trou.

Avantageusement, la partie diffusante est plane et inclinée par rapport à sa face transparente support.

Avantageusement, les trous sont des quarts de sphère comportant une partie plane transparente, la partie quart de sphère étant diffusante.

Avantageusement, les trous sont prismatiques et comportent une première partie plane diffusante sensiblement perpendiculaire à la face transparente et une seconde partie plane inclinée comportant des microstructures rétroréfléchissantes, l'angle d'inclinaison de la seconde partie plane valant sensiblement 45 degrés.

L'invention sera mieux comprise et d'autres avantages apparaîtront à la lecture de la description qui va suivre donnée à titre non limitatif et grâce aux figures annexées parmi lesquelles :
La figure 1 déjà commentée représente le synoptique d'un système de visualisation à projecteur d'images selon l'art antérieur ;
La figure 2 déjà commentée représente la diffusion solaire sur un écran de visualisation selon l'art antérieur ;
La figure 3 représente un système de visualisation comportant un écran de visualisation selon l'invention ;
La figure 4 représente une vue en coupe d'un premier mode de réalisation d'un écran de visualisation selon l'invention ;
La figure 5 représente une vue en coupe et une vue de dessus d'un second mode de réalisation d'un écran de visualisation selon l'invention ;
La figure 6 représente une vue en coupe et une vue de dessus d'un troisième mode de réalisation d'un écran de visualisation selon l'invention ;
La figure 7 représente une vue en coupe et une vue de dessus d'un quatrième mode de réalisation d'un écran de visualisation selon l'invention.

Le système de visualisation selon l'invention comporte un projecteur d'images qui n'a pas de caractéristiques particulières et un écran de visualisation associé spécifique. Cet écran de visualisation comporte deux faces transparentes et sensiblement parallèles. Ces faces ne sont pas nécessairement planes et l'écran selon l'invention peut parfaitement s'intégrer à un pare-brise courbe, par exemple.

Dans un grand nombre d'applications et en particulier, lorsque le système de visualisation est intégré dans un cockpit ou dans une cabine de pilotage, comme il a été dit, la position du projecteur par rapport à l'écran est parfaitement déterminée et les yeux de l'utilisateur occupent un emplacement déterminé que l'on appelle dans certaines applications « boîte à oeil ». De la même façon, la lumière solaire ne peut venir que de certaines directions, le cockpit introduisant des masques naturels.

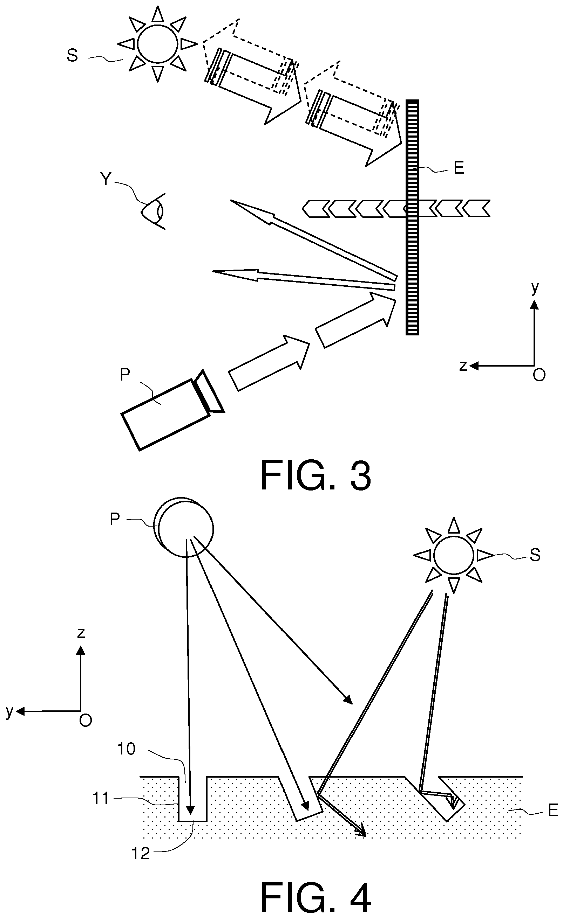

L'écran selon l'invention exploite cette propriété. En disposant une pluralité de motifs diffusants la lumière régulièrement répartis sur une de ses faces transparentes, on peut les agencer de façon que, le projecteur d'images éclairant l'écran sous une pluralité d'incidences déterminées par la position et la taille de l'écran de visualisation, lesdites incidences centrées sur une incidence moyenne, les motifs diffusants comportent au moins une surface diffusante orientée de façon à diffuser les rayons lumineux ayant au moins l'incidence moyenne dans une ou des directions correspondant audit emplacement déterminé de l'observateur. Plus précisément, les motifs diffusent la lumière de façon très différente en fonction de l'incidence. Cette propriété est illustrée sur la figure 3. Les rayons solaires S ne sont pas diffusés vers l'oeil Y de l'observateur alors que ceux issus du projecteur P le sont par l'écran de visualisation. A titre d'exemple, les rayons solaires peuvent être rétroréfléchis par les motifs comme indiqué sur la figure 3.

On peut différentier les écrans de visualisation selon l'invention en deux grands types. Dans le premier type, tous les motifs sont strictement identiques. Dans le second type, chaque motif est orienté en fonction de l'incidence moyenne sur le motif des rayons lumineux issus du projecteur.

Généralement, les dimensions des motifs sont de l'ordre de quelques dizaines de microns à quelques centaines de microns. Le pourcentage de surface de l'écran occupée par les motifs détermine le taux de transmission de l'écran de visualisation. Ainsi, si les motifs occupent 20% de la surface de l'écran, le taux de transmission hors pertes par réflexions vitreuses ne peut dépasser 80%. La réalisation de tels motifs ne pose pas de problèmes de réalisation particuliers. En effet, ces motifs ont essentiellement un rôle photométrique et ne nécessite pas la précision des systèmes optiques destinés à l'imagerie.

A titres d'exemples non limitatifs, les figures 4 à 7 représentent différents modes de réalisation d'un écran de visualisation selon l'invention. Ces figures sont toutes référencées dans le même repère (O, x, y, z) et représentent toutes soit des vues en coupe, soit des vues de dessus comme indiquées sur les figures. Les flèches brisées sur les vues en coupe indiquent le passage d'un rayon lumineux issu du projecteur à l'intérieur du motif, les pointes des flèches sont dirigées vers l'observateur.

La figure 4 représente un premier mode de réalisation des motifs 10. Chaque motif a la forme d'un trou cylindrique creusé dans la face transparente tournée vers le projecteur P. La section du cylindre peut être circulaire mais d'autres formes sont possibles. Les parois 11 du cylindre sont réfléchissantes. Chaque trou comporte un fond 12 plan perpendiculaire à l'axe du cylindre, diffusant et opaque. L'axe du cylindre peut être parallèle à l'incidence moyenne de la lumière issue du projecteur d'image. Dans une variante, l'axe de chaque cylindre est orienté vers l'incidence de la lumière qui éclaire ledit trou. Ainsi, comme on le voit sur la figure 4, chaque trou est dirigé vers le projecteur P. cette configuration permet d'éliminer la lumière solaire S venant d'une direction différente de celle du projecteur P.

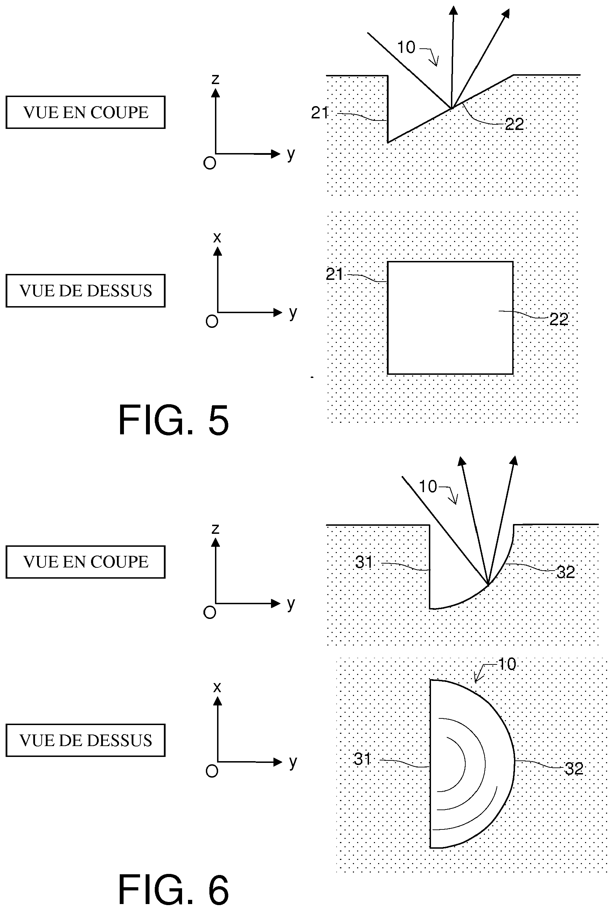

La figure 5 représente un second mode de réalisation des motifs selon l'invention. Chaque motif 10 comporte une facette plane 22 texturée inclinée. L'inclinaison peut être identique pour tous les motifs. Dans une variante, la normale à la facette peut être la bissectrice des deux droites joignant depuis le centre du motif respectivement le centre de la pupille du projecteur et le centre de la boîte à oeil. Dans ce cas, l'inclinaison de la facette varie avec la position du motif. Les caractéristiques de la texture diffusante recouvrant la facette sont ajustées de manière à assurer un éclairement quasi uniforme dans la boîte à oeil, et quasi nul en dehors. La face plane verticale 21 peut être transparente.

La figure 6 représente un troisième mode de réalisation des motifs. Les trous sont alors des quarts de sphère comportant une partie plane transparente 31, la partie quart de sphère 32 étant diffusante. La face diffusante 32 est tournée vers le projecteur.

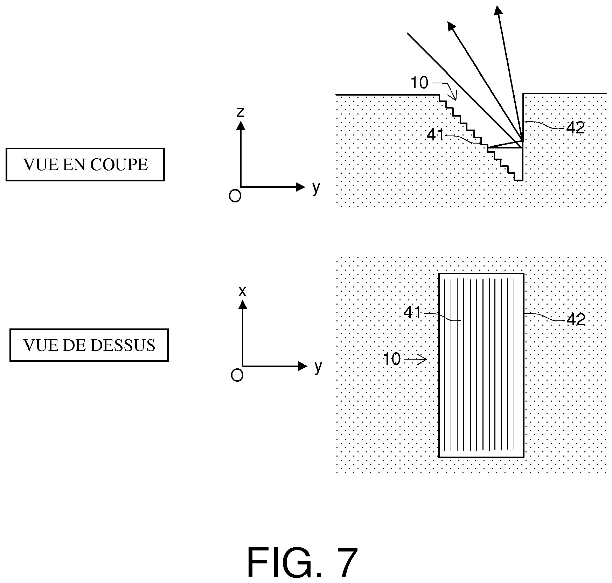

La figure 7 représente un quatrième mode de réalisation des motifs. Dans cette configuration, les trous des motifs 10 sont prismatiques et comportent une première partie 41 plane diffusante sensiblement perpendiculaire à la face transparente et une seconde partie plane 42 inclinée comportant des microstructures rétroréfléchissantes, l'angle d'inclinaison de la seconde partie plane valant sensiblement 45 degrés. Là encore, la face diffusante est tournée vers le projecteur. Les microstructures rétroréfléchissantes présentent l'intérêt de renvoyer la lumière solaire dans la direction d'incidence et par conséquent, l'observateur qui se trouve nécessairement dans une direction différente, n'est pas ébloui.

## Revendications

1. Système de visualisation comportant un projecteur d'images (P) et un écran de visualisation (E) associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs (10) diffusants régulièrement répartis, le projecteur d'images éclairant l'écran sous une pluralité d'incidences déterminées par la position et la taille de l'écran de visualisation, lesdites incidences centrées sur une incidence moyenne, les motifs optiques (10) comportent au moins une surface diffusante (12, 22, 32, 42) orientée de façon à diffuser les rayons lumineux ayant au moins l'incidence moyenne dans une ou des directions correspondant audit emplacement déterminé de l'observateur, **caractérisé en ce que** les motifs (10) sont des trous (11) creusés dans une des deux faces transparentes, chaque trou comportant une partie diffusante et opaque tournée vers l'incidence moyenne.

2. Système de visualisation selon la revendication 1, **caractérisé en ce que** la partie diffusante (22) est plane et inclinée par rapport à sa face transparente support.

3. Système de visualisation selon la revendication 1, **caractérisé en ce que** les trous sont des quarts de sphère comportant une partie plane (31) transparente, la partie quart de sphère (32) étant diffusante.

4. Système de visualisation selon la revendication 1, **caractérisé en ce que** les trous sont prismatiques et comportent une première partie (42) plane diffusante sensiblement perpendiculaire à la face transparente et une seconde partie (41) plane inclinée comportant des microstructures rétroréfléchissantes, l'angle d'inclinaison de la seconde partie plane valant sensiblement 45 degrés.

5. Système de visualisation selon la revendication 1, **caractérisé en ce que** l'orientation de chaque motif est adapté à l'incidence de la lumière issue du projecteur d'image et qui éclaire ledit motif.

6. Système de visualisation selon la revendication 5, **caractérisé en ce que** les motifs sont des trous cylindriques (11) creusés dans une des deux faces transparentes, chaque trou comportant un fond plan (12) perpendiculaire à l'axe du cylindre, diffusant et opaque, l'axe du cylindre étant parallèle à l'incidence de la lumière issue du projecteur d'image et qui éclaire ledit trou.

## Patentansprüche

1. Anzeigesystem, welches einen Bildprojektor (P) und einen dazugehörigen Anzeigebildschirm (E) beinhaltet, wobei das Anzeigesystem dazu bestimmt ist, durch einen an einer bestimmten Position befindlichen Beobachter verwendet zu werden, wobei der Anzeigebildschirm zwei transparente und im Wesentlichen parallele Flächen beinhaltet, wobei der Anzeigebildschirm auf mindestens einer seiner transparenten Flächen eine Vielzahl von gleichmäßig verteilten Streumotiven (10) beinhaltet, wobei der Bildprojektor den Bildschirm entlang einer Vielzahl von Einfallwinkeln beleuchtet, welche durch die Position und die Größe des Anzeigebildschirms bestimmt werden, wobei die Einfallwinkel auf einen mittleren Einfallwinkel zentriert sind, wobei die optischen Motive (10) mindestens eine Streuoberfläche (12, 22, 32, 42) beinhalten, welche so ausgerichtet ist, dass sie die Lichtstrahlen streut, welche mindestens den mittleren Einfallwinkel in einer oder mehreren Richtungen besitzen, welche der bestimmten Position des Beobachters entspricht/entsprechen, **dadurch gekennzeichnet, dass** die Motive (10) Löcher (11) sind, welche in eine der beiden transparenten Flächen gebohrt sind, wobei jedes Loch einen streuenden und lichtundurchlässigen Teil besitzen, welcher in Richtung des mittleren Einfallwinkels gedreht ist.

2. Anzeigesystem nach Anspruch 1, **dadurch gekennzeichnet, dass** der streuende Teil (22) eben und in Bezug auf seine transparente Trägerfläche geneigt ist.

3. Anzeigesystem nach Anspruch 1, **dadurch gekennzeichnet, dass** die Löcher Kugelviertel sind, welche einen ebenen, transparenten Teil (31) besitzen, wobei der kugelviertelförmige Teil (32) streuend ist.

4. Anzeigesystem nach Anspruch 1, **dadurch gekennzeichnet, dass** die Löcher prismatisch sind und einen ersten ebenen, streuenden Teil (42) beinhalten, welcher im Wesentlichen rechtwinklig zur transparenten Fläche ist und einen zweiten, ebenen, geneigten Teil (41), welcher rückreflektierende Mikrostrukturen beinhaltet, wobei der Neigungswinkel des zweiten, ebenen Teils im Wesentlichen 45 Grad beträgt.

5. Anzeigesystem nach Anspruch 1, **dadurch gekennzeichnet, dass** die Ausrichtung eines jeden Motivs an den Einfallwinkel des Lichts, welches aus dem Bildprojektor stammt und das Motiv beleuchtet, angepasst ist.

6. Anzeigesystem nach Anspruch 5, **dadurch gekennzeichnet, dass** die Motive zylindrische Löcher (11) sind, welche in eine der beiden transparenten Flächen gebohrt sind, wobei jedes Loch einen ebenen Boden (12) besitzt, welcher rechtwinklig zur Achse des Zylinders, streuend und lichtundurchlässig ist, wobei die Achse des Zylinders parallel zum Einfallwinkel des Lichts ist, welches aus dem Bildprojektor stammt und das Loch beleuchtet.

## Claims

1. Display system comprising an image projector (P) and an associated display screen (E), said display system designed to be used by an observer situated at a given location, said display screen comprising two transparent and substantially parallel faces, said display screen comprising, on at least one of its transparent faces, a plurality of regularly distributed scattering patterns (10), the image projector illuminating the screen under a plurality of angles of incidence determined by the position and the size of the display screen, said angles of incidence being centred on a mean angle of incidence, the optical patterns (10) comprise at least one scattering surface (12, 22, 32, 42) oriented in such a manner as to scatter the light rays having at least the mean angle of incidence in one or more directions corresponding to said given location of the observer, **characterized in that** the patterns (10) are holes (11) formed in one of the two transparent faces, each hole comprising a scattering and opaque part turned towards the mean angle of incidence.

2. Display system according to claim 1, **characterized in that** the scattering part (22) is plane and inclined with respect to its transparent support face.

3. Display system according to claim 1, **characterized in that** the holes are semi-hemispheres comprising a plane transparent part (31), the semi-hemisphere part (32) being scattering.

4. Display system according to claim 1, **characterized in that** the holes are prismatic and comprise a first plane scattering part (42) substantially perpendicular to the transparent face and a second inclined plane part (41) comprising back-reflecting microstructures, the angle of inclination of the second plane part being substantially equal to 45 degrees.

5. Display system according to claim 1, **characterized in that** the orientation of each pattern is adapted to the angle of incidence of the light coming from the image projector and which illuminates said pattern.

6. Display system according to claim 5, **characterized in that** the patterns are cylindrical holes (11) formed in one of the two transparent faces, each hole comprising a plane bottom (12) perpendicular to the axis of the cylinder, being scattering and opaque, the axis of the cylinder being parallel to the angle of incidence of the light coming from the image projector and which illuminates said hole.
